(19) Europäisches Patentamt

European Patent Office

Office européen des brevets

(11) **EP 0 966 377 B1**

(12) **EUROPEAN PATENT SPECIFICATION**

(45) Date of publication and mention
of the grant of the patent:
**02.10.2002 Bulletin 2002/40**

(21) Application number: **98903201.6**

(22) Date of filing: **12.02.1998**

(51) Int Cl.⁷: **B60T 8/00**

(86) International application number:
**PCT/GB98/00440**

(87) International publication number:
**WO 98/040256 (17.09.1998 Gazette 1998/37)**

(54) **ANTI-LOCK BRAKING SYSTEM FOR VEHICLES HAVING AN ELECTRONIC BRAKING SYSTEM**

BLOCKIERGESCHÜTZTES BREMSSYSTEM FÜR KRAFTFAHRZEUGE MIT ELEKTRONISCHEM BREMSSYSTEM

SYSTEME DE FREIN ANTIBLOCAGE POUR VEHICULES EQUIPES D'UN SYSTEME DE FREINAGE ELECTRONIQUE

(84) Designated Contracting States:
**DE FR GB IT SE**

(30) Priority: **12.03.1997 GB 9705051**

(43) Date of publication of application:
**29.12.1999 Bulletin 1999/52**

(73) Proprietor: **Meritor Automotive Inc.
Troy, Michigan 48084-7186 (US)**

(72) Inventors:
• **LEONARD, Robert Charles
Bedworth, Nuneaton CV12 0NX (GB)**

• **BREARLEY, Malcolm
Solihull, West Midlands B91 3JQ (GB)**
• **MOSELEY, Richard Brian
Leamington Spa, Warwickshire CV32 7XL (GB)**

(74) Representative: **W.P. Thompson & Co.
Coopers Building,
Church Street
Liverpool L1 3AB (GB)**

(56) References cited:
**DE-A- 2 243 260          DE-A- 2 429 555
DE-A- 2 518 196          DE-A- 2 610 585
DE-A- 3 413 738          GB-A- 2 276 687**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to anti-lock braking systems (ABS) for vehicles having electronic braking (EBS).

Electronic Braking Systems (EBS) for four wheeled vehicles are conventionally organised into four channels so that each wheel will have a pressure control channel devoted to setting braking pressures individually. Lower cost systems are able to offer the advantages of EBS by providing only two channels of pressure control organised on an axle basis and thereby satisfying the requirement for a split system and allowing braking pressure distribution to be controlled in a typical case, by setting braking pressures in proportion to the axle loads in static or dynamic conditions.

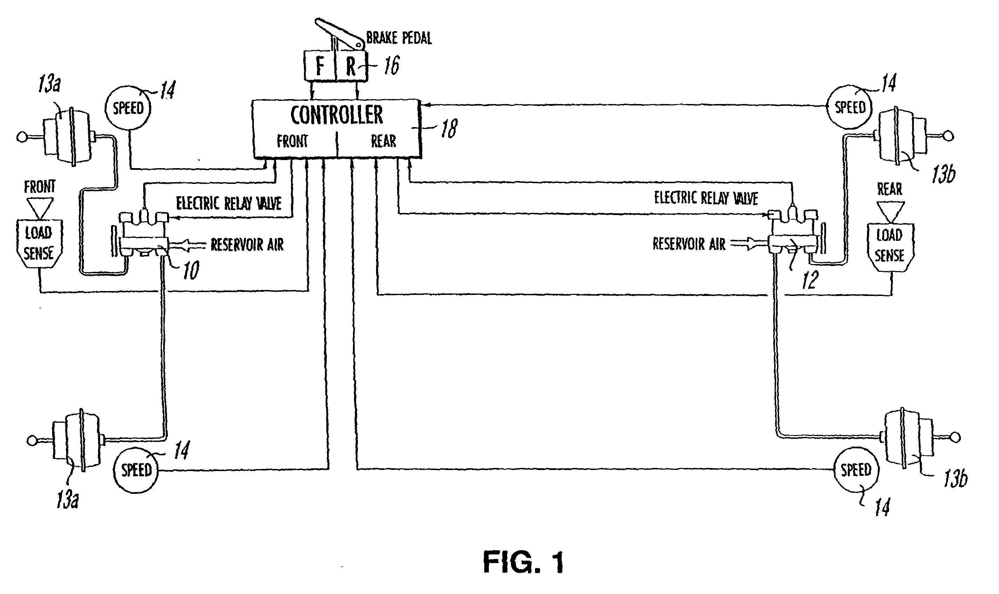

A two channel system is shown in Fig. 1 of the accompanying drawings, to comprise a single electrically controlled relay valve for each axle which in normal EBS operation set the braking pressures in response to the driver demand which is in the form of an electrical signal produced by a specially adapted brake pedal. As shown in Fig. 1, some systems provide axle load measurements made from suitable sensors associated with each axle and this allows braking levels to be made in proportion to axle load values. Such load measurements are made on at least those applications where stability may be at risk because of the level of braking demanded or the conditions of the road surface.

However, on slippery roads where the braking demand is higher than the road surface is capable of supporting, the EBS has to provide an ABS function in order to control the wheel skidding which will be produced. In a two channel EBS, the ABS function has to be a compromise because the individual control of wheel pressures, however desirable, is not possible. Systems are known in which ABS operation is based on axle control and the most common arrangement is known as "Select-Low" whereby the speed of the slowest wheel on an axle is paramount in controlling the axle braking pressure at any instant, so that the first wheel to skid causes axle pressure fall and further the last wheel to recover is selected in the controller to set the brake reapply pressure. Generally, this is the safest control strategy since it prevents either wheel from locking or indeed from operating in deep slip, thereby preserving stability and steerability.

On split-adhesion surfaces, this strategy favours stability at the expense of stopping distance since the axle braking pressure is held down to the low-mu skid level, thereby preventing the axle from reaching the higher braking pressures which the high-mu wheel will stand. Braking regulations require a stopping distance performance on split-adhesion surfaces which a "Select-Low" strategy cannot provide so that the control algorithm must be made more complex if two channel EBS is to be legal and acceptable.

Alternative control, with no increase in complexity, is "Select-High" where the wheel on the axle with the highest speed controls the axle pressure. This is good for stopping distance but is not popular because the low-mu wheel is always allowed to lock since the signal therefrom is ignored. In the case of an homogeneous surface, "Select-High" will allow the first wheel to skid without taking any action so that unless brakes and adhesion are well balanced, wheel lock will occur as it will when braking in a bend when wheel loading is likely to be different left to right.

It is known in ABS systems to adopt the "select-low" condition only in certain conditions and to switch over to select high when such conditions are not present For example, in GB-A-2276687 there is described a vehicle braking system having a controller responsive to wheel speed signals from at least two wheel speed sensors, sensing skid conditions of at least two wheels and for generating skid control instructions, a plurality of wheel brakes, a common supply valve for supplying brake pressure to said brakes from a fluid pressure supply in accordance with brake operating signals from a skid control means controlled by said skid control instructions for controlling the brake pressure in a plurality of cycles each of which comprises a pressure reduction phase and a pressure increase phase. The controller comprises first comparison means to compare the co-efficient of friction of the lower friction surface with a predetermined threshold and/or second comparison means to compare the relative values of the co-efficients of friction of the surfaces with which at least two of the wheels are engaged. The skid control means is operated in a select low mode if the comparison means determines that a) the co-efficient of friction of the lower friction surface is above a predetermined absolute level, and/or b) the co-efficients of friction of the surfaces with which at least two of the wheels are engaged differ by less than a predetermined amount, and in a select high mode if the comparison means determines that a) the co-efficient of friction of a low friction surface is at or below a predetermined absolute level, and/or b) the co-efficients of friction of said surfaces differ by at least said predetermined amount.

It is a primary object of the present invention to solve the above-explained problem in a EBS system by more intelligent control using all four wheel speeds and other braking system data, such as pressures, along with other vehicle information, such as axle loadings, which are available in EBS systems but not provided in conventional ABS schemes.

In accordance with the present invention there is provided a two or more channel electronic braking systems (EBS) adapted to control at least one axle by a single control channel and wherein wheel speed signals from at least four vehicle wheels are processed in an electronic controller, the EBS comprising:

wheel speed input processors which provide accurate wheel speed measurements which are updated frequently and regularly and further processed to yield wheel and vehicle deceleration signals and a rate of change of deceleration signal,

wheel speed selectors which are switched by a mode control to "Select Low" or "Select High" when split mu conditions are detected, so as to connect the appropriate wheel speed signal as the skid detector input,

reference speed generators which process wheel speed signals to form an average reference speed level for each side of the vehicle,

slip detectors which compare wheel speed readings with the appropriate reference speed and produce long time constant average slip signals for each wheel,

a mode control section which accepts processed slip averages and skid control conditions to detect split-adhesion operation and make thereupon the "Select High" or "Select low" decisions, and

skid detector/controller sections which detect incipient skid conditions from the selected wheel speeds and consequently control the axle braking pressures by driving the solenoids of brake pressure modulating valves in each channel on the basis of wheel slip or braking pressure limit requirements, the latter components collectively giving ABS operation, characterised by having the vehicle operating mode set to "Select Low" until a first skid cycle occurs in which split-adhesion conditions are detected on any axle, where wheel-slip level is large at one wheel of that axle, whilst slip levels at the opposite wheel on that axle and at the wheel on the opposite end of a second axle are both low and the deceleration of the vehicle does not exceed a threshold value within a predetermined band.

Preferably, said threshold lies in the range 2.5 to 3.5m/s$^2$.

In one preferred embodiment, detection of split-mu conditions is arranged to cause axles to be switched over from the "Select Low" operating mode, in which the lower wheel speed on an axle is instrumental in controlling the axle braking pressure to prevent either wheel lacking, to the alternative "Select High" control mode in which the higher speed wheel is used to control only that wheel which is operating on the higher adhesion surface, characterised in that in this mode, the braking pressure on the steering axle is limited to a preset level set according to the following relationship:-

$$Pfl = Pfb + FPr,$$

where - Pfl is steering axle P limit.
Pfb is a constant.
Pr is rear axle brake pressure, and
F is a pre-set fraction chosen so that under steady state split-mu conditions, the high-mu wheel does not skid.

In another preferred embodiment, dual reference speeds are developed, one for each side of the vehicle for use in normal running and in the "Select Low" mode, but wherein both switched to the speed signal of that wheel on the steering axle which is on the higher adhesion side of the vehicle once the "Select High" decision has been made.

Advantageously, a means can be provided to allow the low mu wheel a chance to recover from the locked condition by the generation of a period in which the axle pressure is reduced to a pre-set low level, typically 0.5 bar, and then allowed to build up at a pre-set controlled rate if there is detected an increase in vehicle deceleration, as derived from the speed signals measured from either of the wheels which are running on the high adhesion surface, whilst the corresponding braking pressures are being maintained in slow rise.

Means can be provided to allow the low mu wheel a chance to recover from the locked condition by the generation of a period in which the axle pressure is reduced to the said low level and then allowed to build at said controlled rate if a filtered signal representative of the modulus of the rate of change of measured wheel deceleration shows an increase greater than a pre-set threshold during a period in which the braking pressure of that axle carrying the wheel from which the deceleration signal is being derived is being maintained in slow rise.

In a further advantageous embodiment, in the "Select High" mode, each axle high-mu wheel is controlled so that the axle braking pressure build up rate which is normally made proportional to the pressure level developed, is regulated in an override mode by the level of slip detected between the vehicle reference and the actual wheel speed being measured, through the mechanism of generating small pressure drop commands which are proportional to the rate of pressure rise, interspersed with periods of said pressure rise.

Preferably, in the latter embodiment, the speed of the high-mu wheel is regulated to a pre-set target low level of slip, but if this wheel slip increases, a fixed percentage braking pressure drop is generated so as to reduce the actual wheel slip to the set target.

Advantageously, on failure of the high-mu wheel to recover, as detected by slip and wheel deceleration levels exceeding pre-set thresholds, there is produced a full ABS pressure dump command until the wheel deceleration is reduced.

In some preferred embodiments, the transition from split-mu to low mu causes reversion to the "Select Low" mode when detected by wheel slip or re-acceleration levels exhibiting sensibly equal values at both wheels on the axle.

The invention is described further hereinafter, by way of example only, with reference to the accompanying drawings, in which:-

Fig. 1 illustrates a typical EBS system of known type;

Fig. 2 is a system diagram illustrating one embodiment of a single split-mu detector in accordance with the present invention;

Fig. 3 shows a number of operational response curved of the system of Fig. 2 on split-mu where the right hand wheels are on the low adhesion surface and therefore skid first during braking;

Figs. 4a and 4b illustrate how slip and pressure command vary in certain operational conditions; and

Fig. 5 shows a series of response curves in another operational condition.

Referring first to Fig. 1, there is illustrated a typical known electronic braking system EBS having ABS in which two axle-based relay valves 10, 12 are electrically controlled to adjust the supply of actuating fluid to respective pairs of brake actuators 13a, 13b. Four wheel speed sensors 14 supply electrical signals dependent upon the respective wheel speeds. The relay valves 10,12 set the axle braking pressures in proportion to the driver's demand as generated by an electrical signal from a brake pedal 16, under the supervision of an electronic controller 18. This process will be interrupted whenever the wheel speeds, derived by well known processing of the wheel speed sensor outputs, are interpreted by the controller 18 as the commencement of a wheel skid condition. The present invention is concerned, inter alia, with how the pressure output signals are modified to produce good stability, along with acceptable stopping distances, on split-mu surfaces, both in the case of two-channel systems and systems having more than two channels.

The principle employed generates from the wheel speed sensors four sets of wheel data, namely speed, deceleration, acceleration and slip by suitable processing in the controller. On homogeneous surfaces, an effective "Select-Low" regime is employed whereby the lowest wheel speed data on the axle is examined continuously in an algorithm which generates the level of axle pressure appropriate to the maintenance of effective control of the speed of that selected wheel. Thus, the first wheel to skid is instrumental in controlling pressure throughout the cycle and the last wheel to recover effects the reapplication of braking pressure to both wheels on the axle.

On split adhesion surfaces, the tyre to road friction level on one side of the vehicle is considerably lower than on the other side of the vehicle. This condition ideally requires individual control of wheel braking pressures but, even in such a system, independent control of front wheel brakes, purely on the strict basis of controlling wheel speeds during skidding, is never used since the steering pull generated threatens control of the vehicle directional stability. In the system being described, "Select-Low" control is employed initially until split-adhesion conditions are detected by monitoring the comparative wheel slip levels at each side of the vehicle.

Split-adhesion operation, with an attendant mode change, is accepted if at any time one wheel on a first axle exhibits a level of slip sufficiently high and increasing faster than a pre-set rate, so as to be interpreted as a skidding condition, whilst the wheel on the opposite end of the axle is running at low slip AND the wheel on the opposite end of a second axle of the vehicle is also in low slip. Once split adhesion conditions are assumed, the "Select Low" operating mode is changed for the vehicle as a whole, provided that the vehicle deceleration is below a predetermined level set for the vehicle and lying in the range 2.5-3.5m/s$^2$ This results in operation on high adhesion split-mu surfaces remaining in "Select Low" mode, thereby preventing any wheel locking and consequent tyre damage.

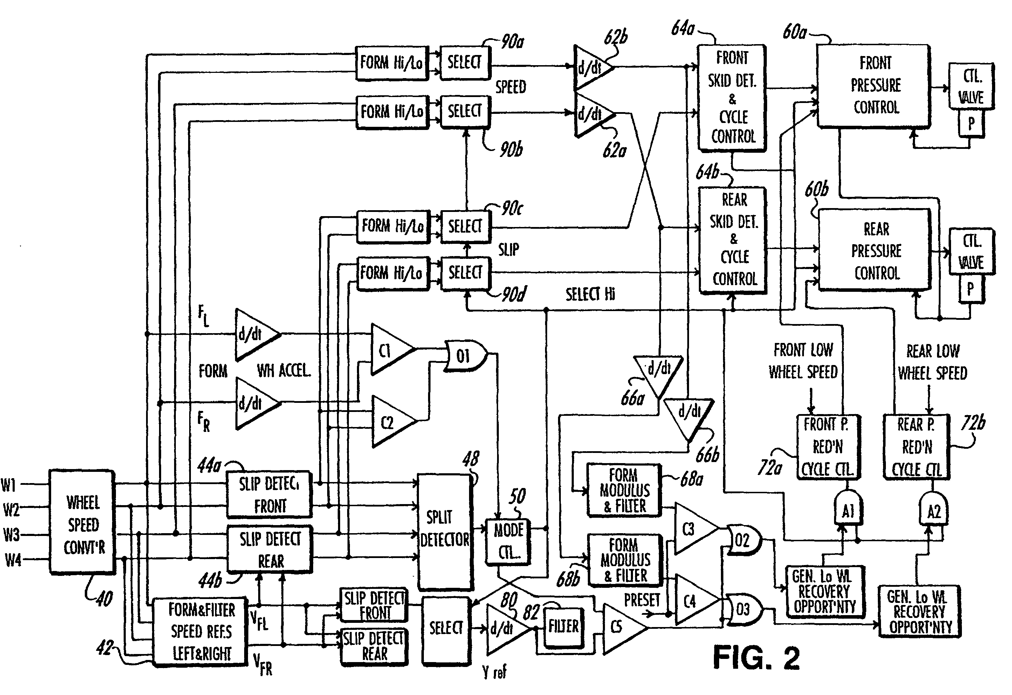

The reliability of this detection process is improved by employing two vehicle speed reference signals VRL & VRR, one for each side of the vehicle, from which the wheel speed values are subtracted to generate four slip figures. This is shown in Fig. 2 where wheel speed values are obtained frequently and regularly from a wheel speed converter block 40 which takes input from the wheel sensor pulse trains, W1,W2,W3,W4 in a manner which is well known in the art. VRL & VRR are produced at 42 from left and right side filtered wheel speed signals by accepting the highest levels and are used in the front and rear slip detectors 44a,44b to produce wheel slip signals which provide input conditions for skid detectors 64a,64b and the single split-mu detector 48 of Fig. 2. The advantage of the use of dual reference signals lies in not increasing the detector sensitivity during vehicle cornering or operation in bends.

Converted wheel speeds also feed the skid detectors 64a,64b for front and rear channels via blocks 62a,62b which form the wheel deceleration signals through a differentiation process whilst the slip detector outputs are combined with these deceleration signals so as to allow the skid detectors 64a,64b to make skidding and recovery decisions on the most up to date wheel derived signals. This section also controls the pressure demands on a cycle basis which generally comprises dump, hold and fast & slow rebuild phases. Wheel signals are processed to form, for each axle, signals as above for the high speed and the low speed wheels on the axle and these are selected for the skid detectors 64a,64b by switching stages 90a,90b,90c,90d which are controlled by a mode control unit 50 which normally resides in the base state so as to select the low wheel signals and is switched into the "Select High" state only when split-mu skidding is detected.

On an occurrence of the first wheel to skid, the high and increasing level of wheel slip appearing causes the split-mu detector 48 to make comparison between slip at this wheel and those on the wheels on the opposite side of the vehicle. If uniform or near uniform conditions are present, both wheels on the axle will be in similar slip conditions and split-mu will not be detected so that mode control 48 will remain in "Select Low" and axle braking will be set so as to control the lower wheel speed without losing much adhesion utilisation on the higher wheel.

On split-mu being detected however, the slip differences between opposite side wheels will be significant and the detector 48 checks the comparative slip between each skidding wheel and the opposite sidewheel on the other axle. If these levels also show considerable differences, the split-mu detector 48 will signal the mode control 50 to switch to "Select High", provided that the filtered vehicle deceleration as derived from the vehicle reference, is less that the pre-set level set to depend on the actual vehicle but to lie in the 2.5-3.5m/s/s range.

This mode change causes both axles to change over to select the high wheel signals as the source for skid detector inputs and at the same time selects the vehicle reference source from the front axle high wheel instead of the average of the higher speed wheels. This generally results, on split-mu surfaces, in the low-mu wheels locking as pressures are gradually increased on each axle.

On many surfaces, the high-mu wheels will not skid at all unless braking demand is very high and in most cases the skid detectors are quiescent until brake pressure has built up. This is particularly the case on the front axle where pressure build-up is limited in the pressure controller 60 to a fixed level Pfb designed to obtain good braking from the front high-my wheel. When the rear axle is laden, some increase in the front axle load is inevitable and a higher level of braking can be accepted. Therefore the front braking pressure limit Pfl receives a higher setting by fixing the limit at:

$$Pfl = Pfb + FPr$$

where Pr is the rear axle braking pressure.
F is a fraction of this pressure,
and F is selected so that under steady state conditions the front axle high-mu wheel does not skid but retains however an ideal level of braking below that which risks skidding.

In the "Select High" control mode, the build-up of pressure is made exponential by arranging for the rate to be proportional to the pressure level reached until interrupted at the front by the limiting action outlined above and at the rear by the onset of easily detectable slip. The slip detectors, in this mode, are switched to operate in a manner such as to hold low levels of slip at the high wheels, typically 0.3 kph + 3%. This is achieved in the cycle control and pressure control units in concert through the means of generating a small pressure reduction step immediately this slip level is sensed. These reductions are interspersed between periods of slow pressure rise if the slip level falls as a response to the reduction.

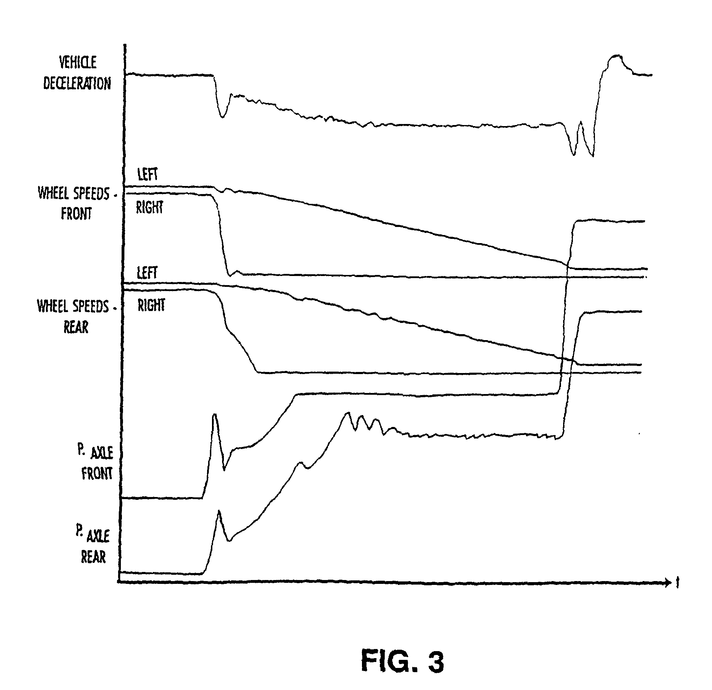

Fig. 3 shows the system responses on split-mu where the right hand wheels are on the low adhesion surface and therefore skid first during braking. These low-mu wheels cause corrective pressure dumps to be initiated at both axles but comparative slip differences are registered across each axle. The split-mu detector 48 is invoked by these differences and sets the mode control 50 into "Select High", allowing pressure build-up on both axles. The front axle builds up to the pressure limit as described above and the rear pressure increases until wheel slip exceeds the very small threshold which indicates that the skid pressure for the high mu wheel is being approached. The rear axle pressure is thereafter controlled in a series of small pressure adjustment cycles and is able to hold slip, a useful level of vehicle deceleration being achieved in this mode as the stop progresses. The operation of this slip holding cycle is described in detail below, taking into account practical cases where wheel response to small pressure drops cannot be assured.

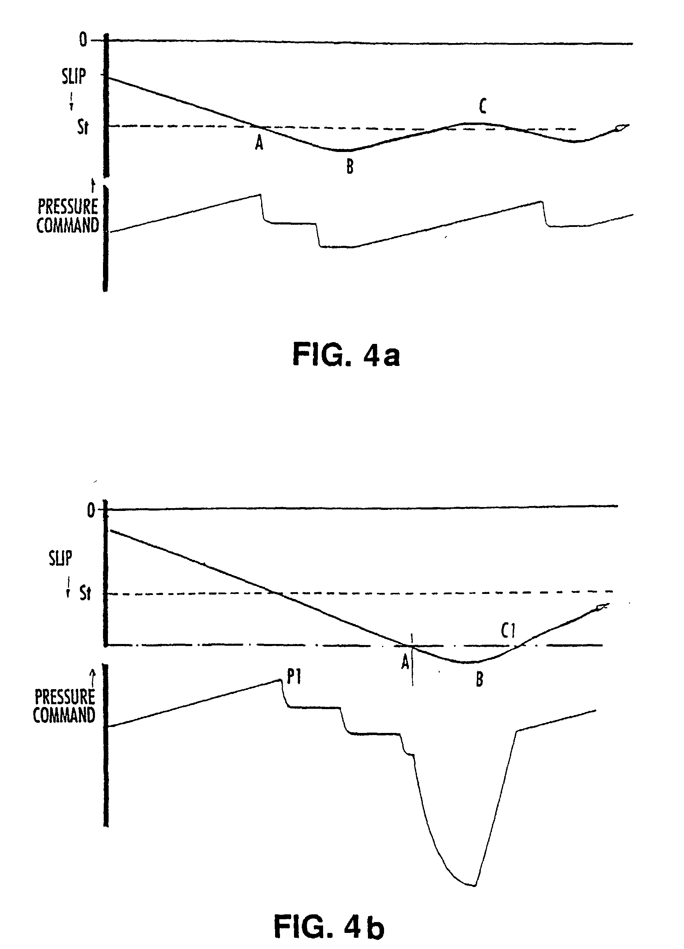

If this slip level does not fall, this pressure drop is repeated after a delay of some 100ms. This is shown in Fig. 4a where slip is increasing as brake pressure rises slowly. At point A, the target threshold is exceeded and a small pressure drop is produced. This is insufficient to reverse the tendency to lose control of the high-mu wheel speed and after a pre-set time period a second pressure drop is produced which is effective at reducing braking and reversing the speed loss trend. As the wheel re-accelerates at point B, brake pressure slowly increases and at some point C, the wheel slip starts to increase and a further pressure reduction phase is produced as the slip target is exceeded once more. This mechanism of small pressure reductions interspersed with periods of slow pressure rise causes slip holding around the selected slip target giving good adhesion utilisation and stable operation.

In cases where the wheel speed does not respond to the pressure reduction increments as the target slip is exceeded, slip continues to build until a deeper slip threshold is reached at point A, set typically at 5%, and this causes a much deeper pressure reduction cycle which ends when the axle braking pressure has been reduced to a pre-set percentage, typically 50%, of the initial value at which the high-mu wheel should recover unless the adhesion level is reducing. If this is the case, there will be no wheel recovery and a full ABS dump cycle is applied to the axle such that braking pressure reduction will be ended only when the wheel response changes from deceleration into acceleration as is shown in Fig. 4b. Thus, beyond point B, wheel speed is shown as recovering whilst brake pressure is increasing. When the brake reaches a pressure equal to a pre-set percentage of the initial pressure P1, the fast rise is changed at point C to a slow rise in order to prevent seriously overshooting the skid pressure for the high-mu wheel and the objective is to settle down the response into a limit cycle oscillation around the target slip St as shown in Fig. 4a.

In practice, split-mu conditions often are short lived and the system recognises the need for testing for improvement in the "low" adhesion surface when in the "Select High" mode. The low wheels are locked during "Select High" split adhesion operation but changes to the adhesion level causes some oscillatory movement at the axle which is detectable from the high adhesion wheel speeds given special processing. These speed signals are processed to form rate of change of acceleration values at every new speed sample. As shown in Fig. 2, acceleration signals are fed from the selected wheel speed differentiators 62a,62b which provide the deceleration and acceleration signals to the skid detectors 64a,64b. These signals are further differentiated at 66a,66b and from the resulting rate of change of acceleration signals, filtered modulus values are formed for each wheel at 68a,68b. The modulus values are compared with a pre-set reference level in comparators C3 and C4 and if either exceeds this level OR gates 02 or 03 produce a pulse to trigger the appropriate Low Wheel Recovery Opportunity Generator 70a,70b, (LWROG). This circuit initiates the axle pressure reduction cycle control unit 72a,72b which overrides the pressure control unit 60 for that axle which has triggered the response and produces an override input which causes the braking pressure to be sharply reduced to a low level, typically 0.5bar, for a short period. This gives the low adhesion wheel a chance to recover and the pressure controller takes consequent action depending on the response from the low wheel speed. If this wheel speed shows no increase, the pressure reduction control restores the pressure at a controlled fast build-up rate to the original level as set by the main cycle control associated with the axle skid detector. However, if the low wheel speed increases from the zero of the locked condition, then the axle pressure reduction cycle controller generates a slow pressure rise which is changed into the normal exponential rise as the slip level falls.

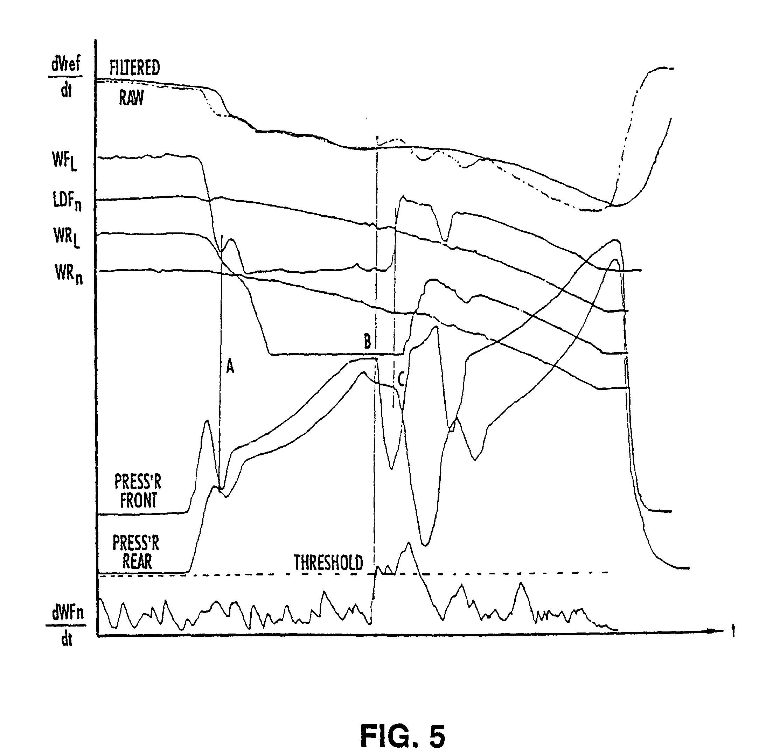

Normally, the front axle detection occurs first and when the slip level falls to less than 50%, the split-mu detector 48 causes a switch back to "Select Low" for the vehicle as a whole. If the rear axle low-mu wheel has not recovered at this point, the switch back causes a pressure reduction so as to effect a full recovery as "Select Low" operation is resumed. This is illustrated in Fig. 5 where the wheel speeds can be seen as WFl, WRh, WTl & WRh, showing split-mu operation at point A when both low wheels are in substantial slip whilst the opposites wheel are in very low slip. The initial pressure response of the ABS action is curtailed at point A when the "Select High" change-over is made. Pressure builds up on both axles and the low wheels are abandoned to lock. The front axle pressure builds up to a limit of Pfl and, on the rear axle developing slip, causes the pressure to fall slightly. At point B, however, the modulus of the rate of change of front wheel acceleration reaches a value where the pre-set threshold is exceeded and the front axle pressure is rapidly reduced to 0.5bar. This is successful in encouraging the front low wheel to reaccelerate since the adhesion thereunder has improved and as the wheel gains speed, the slip falls below the 50% level at point C. This immediately causes the mode control 50 to revert back to "Select Low" and, since the rear axle skid detector 64b suddenly sees the locked wheel at the speed input, the pressure is dumped to generate a recovery. Both wheels on the low-mu surface skid again but conditions are not detected which would cause further switching into the "Select High" state since the cycle on the front "low" wheel is insufficiently deep to register serious filtered slip on this wheel.

A further mechanism for the detection of improving conditions during "Select High" operation is achieved by examination of the vehicle deceleration signal. This signal which is provided by a vehicle reference signal differentiator 80, is compared with the filtered output of the circuit obtained via a filter 82, which is used as an enabling input to the mode control 50. Improving conditions cause vehicle deceleration to increase suddenly and comparator C5 detects this difference and generates via OR gates 02 and 03, a pressure reduction cycle on the front axle in order to give the low mu wheel a chance to recover. If the slip on this wheel falls below 50%, indicating recovery, then the mode control is set to "select low" on both front and rear axles which ensures that all wheels are maintained in a low slip condition.

Another exit possibility causing reversion to "Select Low" control occurs when the higher-mu level falls to the lower mu level. This will be accompanied by a pressure reduction at each axle as the system reacts to maintain control of the higher speed wheel on the axle. In many circumstances, it is possible that the low-mu wheels, as pressure cycling takes place, will recover. If both wheels on the front axle show comparable levels of recovery acceleration, the split-mu detector resets the mode control into "Select Low" and control action is based on the first wheel to skid thereafter.

The split mu detector can also be switched to "select low" control if the filtered slip levels of both front wheels fall to a very low level, indicating a rise in the mu level on the low mu side of the vehicle. A further way of switching back to "select low" can occur when the filtered slip levels of all wheels exceed a predetermined value, thus indicating a fall in mu level on the high mu side of the vehicle.

The provisions of the abovedescribed system allow an EBS system to achieve a good performance on split-mu surfaces even though there is provided only axle control, thereby saving, on a 2 axle vehicle, 2 control channels. By restricting the switching to "Select High" to lower vehicle decelerations, tyre damage is prevented as there is no wheel locking on other than low-mu surfaces.

## Claims

1. A two or more channel electronic braking system (EBS) adapted to control at least one axle by a single control channel and wherein wheel speed signals from at least four vehicle wheels are processed in an electronic controller (18), the EBS comprising:

    wheel speed input processors (40) which provide accurate wheel speed measurements which are updated frequently and regularly and further processed to yield wheel and vehicle deceleration signals and a rate of change of deceleration signal,

    wheel speed selectors (90a,90b,90c,90d) which are switched by a mode control (50) to "Select Low" or "Select High" when split mu conditions are detected, so as to connect the appropriate wheel speed signal as the skid detector input,

    reference speed generators (42) which process wheel speed signals to form an average reference speed level for each side of the vehicle,

    slip detectors (44a,44b) which compare wheel speed readings with the appropriate reference speed and produce long time constant average slip signals for each wheel,

    a mode control section (48,50) which accepts processed slip averages and skid control conditions to detect split-adhesion operation and make thereupon the "Select High" or "Select low" decisions, and

    skid detector/controller sections (64a,64b) which detect incipient skid conditions from the selected wheel speeds and consequently control the axle braking pressures by driving the solenoids of brake pressure modulating valves (60a, 60b) in each channel on the basis of wheel slip or braking pressure limit requirements,

    the latter components collectively giving ABS operation, **characterised by** having the vehicle operating mode set to "Select Low" until a first skid cycle occurs in which split-adhesion conditions are detected on any axle, where wheel-slip level is large at one wheel of that axle whilst slip levels at the opposite wheel on that axle and at the wheel on the opposite end of a second axle are both low and the deceleration of the vehicle does not exceed a threshold value within a predetermined band.

2. An EBS as claimed in claim 1 wherein said threshold lies in the range 2.5 to 3.5 m/s$^2$.

3. An EBS as claimed in claim I or 2, in which detection of split-mu conditions is arranged to cause axles to be switched over from the "Select Low" operating mode in which the lower wheel speed on an axle is instrumental in controlling the axle braking pressure to prevent either wheel locking, to the alternative "Select High" control mode in which the higher speed wheel is used to control only that wheel which is operating on the higher adhesion surface, **characterised in that** in this mode, the braking pressure on the steering axle is limitedtoapre-set level set according to the following relationship:-

    $$Pfl = Pfb + FPr,$$

    where - Pfl is steering axle P limit
    Pfb is a constant.
    Pr is rear axle brake pressure, and
    F is a pre-set fraction chosen so that under steady state split-mu conditions,

    the high-mu wheel does not skid.

4. An EBS as claimed in claim 1, 2 or 3 having means by which dual reference speeds are developed, one for each side of the vehicle for use in normal running and in the "Select Low" mode, but wherein both are switched to the speed signal of that wheel on the steering axle which is on the higher adhesion side of the vehicle once the "Select High" decision has been made.

5. An EBS as claimed in claim 1, 2 or 3 in which means are provided to allow the low mu wheel a chance to recover from the locked condition by the generation of a period in which the axle pressure is reduced to a pre-set low level, typically 0.5bar, and then allowed to build up at a pre-set controlled rate if there is detected an increase in vehicle deceleration, as derived from the speed signals measured from either of the wheels which are running on the high adhesion surface, whilst the corresponding braking pressures are being maintained in slow rise.

6. An EBS as claimed in claim 1, 2 or 3 in which means are provided to allow the low mu wheel a chance to recover from the locked condition by the generation of a period in which the axle pressure is reduced to the said low level and then allowed to build at said controlled rate if a filtered signal representative of the modulus of the rate of change of measured wheel deceleration shows an increase greater than a pre-set threshold during a period in which the braking pressure of that axle carrying the wheel from which the deceleration signal is being derived is being maintained in slow rise.

7. An EBS as claimed in claim 1, 2, 3 or 4, in which, in the "Select High" mode, each axle high-mu wheel is controlled so that the axle braking pressure build up rate which is normally made proportional to the pressure level developed, is regulated in an override mode by the level of slip detected between the vehicle reference and the actual wheel speed being measured, through the mechanism of generating small pressure drop commands which are proportional to the rate of pressure rise, interspersed with periods of said pressure rise.

8. An EBS as claimed in claim 6, in which the speed of the high-mu wheel is regulated to a pre-set preset target low level of slip, but if this wheel slip increases, a fixed percentage braking pressure drop is generated so as to reduce the actual wheel slip to the set target.

9. An EBS as claimed in claims 7 or 8, in which on failure of the high-mu wheel to recover, as detected by slip and wheel deceleration levels exceeding preset thresholds, there is produced a full ABS pressure dump command until the wheel deceleration is reduced.

10. An EBS as claimed in claim 1, 2 or 3, in which the transition from split-mu to low mu causes reversion to the "Select Low" mode when detected by wheel slip or re-acceleration levels exhibiting sensibly equal values at both wheels on the axle.

**Patentansprüche**

1. Elektronisches Bremssystem (EBS) mit zwei oder mehr Kanälen, das zum Steuern wenigstens einer Achse durch einen einzigen Steuerkanal ausgelegt ist, und bei dem Radgeschwindigkeitssignale von mindestens vier Fahrzeugrädern in einer elektronischen Steuerung (18) verarbeitet werden, wobei das EBS umfasst:

Radgeschwindigkeitseingabeprozessoren (40), die genaue Radgeschwindigkeitsmessungen liefern, welche oft und regelmäßig aktualisiert und weiter verarbeitet werden, um Rad- und Fahrzeugsverlangsamungssignale und eine Änderungsgeschwindigkeit eines Verlangsamungssignals zu erhalten,

Radgeschwindigkeitsauswähleinrichtungen (90a, 90b, 90c, 90d), die durch eine Betriebsartsteuerung (50) auf "Wähle niedrig aus" oder "Wähle hoch aus" geschaltet werden, wenn ge-

teilte μ-Bedingungen ermittelt werden, um so das geeignete Radgeschwindigkeitssignal als die Schleuderdetektoreingabe einzugeben,

Bezugsgeschwindigkeitsgeneratoren (42), die Radgeschwindigkeitssignale verarbeiten, um eine durchschnittliche Bezugsgeschwindigkeitshöhe für jede Seite des Fahrzeugs zu bilden,

Schlupfdetektoren (44a, 44b), die Radgeschwindigkeitsmesswerte mit der geeigneten Bezugsgeschwindigkeit vergleichen und Durchschnittsschlupfsignale einer langen Zeitkonstante für jedes Rad zu erzeugen,

ein Betriebsartsteuerabschnitt (48, 50), der verarbeitete Schlupfdurchschnitte und Schleudersteuerungsbedingungen akzeptiert, um geteilten Haftungsbetrieb zu ermitteln und anhand desselben die Entscheidungen "Wähle hoch aus" und "Wähle niedrige aus" zu treffen, und

Schleuderungsdetektor/Steuerabschnitte (64a, 64b), die beginnende Schleuderbedingungen von den gewählten Radgeschwindigkeiten ermitteln und folglich die Achsenbremsdrucke durch Antreiben der Solenoide von Bremsdruckmodulierventilen (60a, 60b) in jedem Kanal auf der Grundlage von Radschlupf- oder Bremsdruckgrenzanforderungen zu steuern,

wobei die letzteren Komponenten kollektiv ABS-Betrieb liefern, **dadurch gekennzeichnet, dass** die Fahrzeugbetriebsart auf "Wähle niedrig aus" eingestellt ist, bis ein erster Schleuderungszyklus erfolgt, in dem geteilte Haftungsbedingungen an irgendeiner Achse ermittelt werden, wo die Radschlupfgröße an einem Rad dieser Achse hoch ist, während Schlupfgrößen an dem gegenüberliegenden Rad an dieser Achse und an dem Rad an dem gegenüberliegenden Ende einer zweiten Achse beide klein sind und die Verlangsamung des Fahrzeugs keinen Grenzwert innerhalb eines vorbestimmten Bands übersteigt.

2. EBS nach Anspruch 1, bei dem die genannte Grenze in dem Bereich 2,5 bis 3,5 m/s$^2$ liegt.

3. EBS nach Anspruch 1 oder 2, bei dem die Ermittlung von geteilten μ-Bedingungen eingerichtet ist, um Umschaltung von Achsen von der Betriebsart "Wähle niedrig aus", in der die niedriger Radgeschwindigkeit an einer Achse das Instrument zum Steuern des Achsenbremsdrucks zur Verhindern der Blockierung irgendeines Rads darstellt, auf die alternative Betriebsart "Wähle hoch aus" zu verursachen, in der die höhere Radgeschwindigkeit verwendet wird, um nur das Rad zu steuern, das auf der Oberfläche höherer Haftung arbeitet, **dadurch gekennzeichnet, dass** in dieser Betriebsart der Bremsdruck auf der Lenkachse auf eine vorgegebene Höhe gemäß dem folgenden Verhältnis voreingestellt ist:

$$PFl = Pfb + FPr,$$

wobei - Pfl die Grenze der Lenkachse P ist.
Pfb eine Konstante ist.
Pr ein Hinterachsenbremsdruck ist, und
F ein vorgegebener Bruchteil ist, der so gewählt ist, dass unter dauerhaften geteilten $\mu$-Bedingungen das Rad mit hohem $\mu$ nicht schleudert.

4.  EBS nach Anspruch 1, 2 oder 3 mit Mitteln, durch die doppelte Bezugsgeschwindigkeiten entwickelt werden, eine für jede Seite des Fahrzeugs, zur Verwendung bei normaler Fahrt und in der Betriebsart "Wähle niedrig aus", bei dem jedoch beide auf das Geschwindigkeitssignal dieses Rads an der Lenkachse geschaltet werden, die auf der Seite höherer Haftung des Fahrzeugs ist, nachdem die Entscheidung "Wähle hoch aus" getroffen wurde.

5.  EBS nach Anspruch 1, 2 oder 3, bei dem Mittel vorgesehen sind, um dem Rad mit niedrigem $\mu$ eine Möglichkeit zu geben, sich von dem blockierten Zustand durch die Erzeugung einer Zeitspanne zu erholen, in der der Achsendruck auf eine vorgegebene niedrige Höhe, typischerweise 0,5 Bar verringert wird, und sich dann bei einer vorgegebenen gesteuerten Geschwindigkeit aufbauen gelassen wird, wenn ein Anstieg in der Fahrzeugverlangsamung ermittelt wird, wie abgeleitet von den Geschwindigkeitssignalen, welche von einem der auf der Oberfläche hoher Haftung laufenden Räder gemessen werden, während die entsprechenden Bremsdrukke in langsamem Anstieg aufrechterhalten werden.

6.  EBS nach Anspruch 1, 2 oder 3, in dem Mittel vorgesehen sind, um dem Rad mit niedrigem $\mu$ eine Möglichkeit zu geben, sich von dem blockierten Zustand durch die Erzeugung einer Zeitspanne zu erholen, in der der Achsendruck auf die genannte niedrige Höhe verringert wird und sich dann bei der genannten gesteuerten Geschwindigkeit aufbauen gelassen wird, wenn ein gefiltertes Signal, das das Modul der Änderungsgeschwindigkeit der gemessenen Radverlangsamung darstellt, eine größere Zunahme als ein vorgegebener Grenzwert während einer Zeitspanne zeigt, in der der Bremsdruck der das Rad tragenden Achse, von dem das Verlangsamungssignal abgeleitet wird, in langsamem Anstieg gehalten wird.

7.  EBS nach Anspruch 1, 2, 3 oder 4, bei dem in der Betriebsart "Wähle hoch aus" jedes Achsenrad mit hohem $\mu$ so gesteuert wird, dass die Aufbaugeschwindigkeit des Achsenbremsdrucks, die normalerweise proportional zu der entwickelten Druckhöhe gemacht wird, in einer Übergehungsbetriebsart durch die Höhe des Schlupfes, der zwischen der Fahrzeugbezugs- und der tatsächlich gemessenen Radgeschwindigkeit ermittelt wird, durch den Mechanismus zum Erzeugen kleiner Druckabfallbefehle geregelt wird, die proportional zu der Druckanstiegsgeschwindigkeit sind, eingestreut mit Zeitspannen des genannten Druckanstiegs.

8.  EBS nach Anspruch 6, bei dem die Geschwindigkeit des Rads mit hohem $\mu$ auf eine vorgegebene niedrige Zielhöhe von Schlupf geregelt wird, wenn jedoch der Schlupf dieses Rads zunimmt, ein feststehender Prozentsatz von Bremsdruckabfall erzeugt wird, um so den tatsächlichen Radschlupf auf den gegebenen Zielwert zu verringern.

9.  EBS nach den Ansprüchen 7 oder 8, bei dem bei Versagen des Rads mit hohem $\mu$, sich zu erholen, wie durch Schlupf- und Radverlangsamungshöhen ermittelt wird, die vorgegebene Grenzwerte überschreiten, ein vollständiger ABS-Druckunterbrechungsbefehl erzeugt wird, bis die Radverlangsamung verringert ist.

10. EBS nach Anspruch 1, 2 oder 3, bei dem der Übergang von geteiltem $\mu$ zu niedrigem $\mu$ Umkehr der Betriebsart "Wähle niedrig aus" verursacht, wenn ermittelt durch Radschlupf- oder Radverlangsamungsgrößen, die vernünftig gleiche Werte an beiden Rädern an der Achse aufweisen.

**Revendications**

1.  Système de freinage électronique (EBS) à deux ou plusieurs canaux adapté pour commander au moins un essieu par canal de commande unique et dans lequel des signaux de vitesse de roue provenant d'au moins quatre roues de véhicule sont traités dans un contrôleur électronique (18), l'EBS comprenant:

    des processeurs d'entrée de vitesse de roue (40) qui assurent des mesures précises de vitesse de roue qui sont mises à jour fréquemment et régulièrement et traitées davantage pour produire des signaux de décélération de roue et de véhicule et un taux de changement du signal de décélération,
    des sélecteurs de vitesse de roue (90a, 90b, 90c, 90d) qui sont commutés par une commande de mode (50) sur "Sélection haute" ou "Sélection basse" quand des conditions de mu partagé sont détectées, de manière à connecter le signal de vitesse de roue approprié comme entrée du détecteur de patinage,

des générateurs de vitesse de référence (42) qui traitent les signaux de vitesse de roue pour former un niveau de vitesse de référence moyen pour chaque côté du véhicule,

des détecteurs de glissement (44a, 44b) qui comparent les lectures de vitesse de roue à la vitesse de référence appropriée et produisent des signaux de glissement moyen à longue constante de temps pour chaque roue,

une section de commande de mode (48, 50) qui accepte des moyennes de glissement traitées et des conditions de commande de patinage pour détecter un fonctionnement à adhérence partagée et prendre alors les décisions de "Sélection haute" et "Sélection basse", et

des sections de détecteur/contrôleur de patinage (64a, 64b) qui détectent des conditions naissantes de patinage à partir des vitesses de roues sélectionnées et commandent en conséquence les pressions de freinage d'essieu en attaquant les solénoïdes de soupapes de modulation de pression de freins (60a, 60b) dans chaque canal sur la base des exigences de limitation du glissement des roues ou de la pression de freinage,

ces derniers composants assurant collectivement un fonctionnement ABS, **caractérisé par le fait que** le mode d'exploitation du véhicule est réglé sur "Sélection basse" jusqu'à ce qu'un premier cycle de patinage se produise dans lequel des conditions d'adhérence partagée sont détectées sur n'importe quel essieu, où le niveau de glissement de roue est important sur une roue de cet essieu tandis que les niveaux de glissement au niveau de la roue opposée sur cet essieu et au niveau de la roue sur l'extrémité opposée d'un deuxième essieu sont tous les deux faibles et la décélération du véhicule ne dépasse pas une valeur de seuil dans une plage prédéterminée.

2. EBS selon la revendication 1, dans lequel ledit seuil se situe dans la plage de 2,5 à 3,5 m/s$^2$.

3. EBS selon la revendication 1 ou 2, dans lequel il est fait en sorte que la détection de conditions de mu partagé force la commutation des essieux du mode d'exploitation "Sélection basse" dans lequel la vitesse inférieure des roues sur un essieu sert à commander la pression de freinage d'essieu pour empêcher un blocage de l'une ou l'autre roue, à l'autre mode de commande "Sélection haute" dans lequel la vitesse supérieure des roues est utilisée pour commander uniquement la roue qui se trouve sur la surface d'adhérence supérieure, **caractérisé en ce que** dans ce mode, la pression de freinage sur l'essieu de direction est limitée à un niveau pré-établi conformément à la relation suivante :

$$Pfl = Pfb + FPr,$$

où - Pfl est la limite P de l'essieu de direction.
Pfb est une constante,
Pr est la pression des freins de l'essieu arrière, et
F est une fraction pré-établie choisie de telle sorte que dans des conditions de mu partagé en régime permanent, la roue à mu élevé ne dérape pas.

4. EBS selon la revendication 1, 2 ou 3, ayant un moyen par lequel des doubles vitesses de référence sont développées, l'une pour chaque côté du véhicule destiné à être utilisé pour une conduite normale et dans le mode "Sélection basse", mais dans lequel les deux sont commutées sur le signal de vitesse de la roue sur l'essieu de direction qui se trouve sur le côté d'adhérence supérieure du véhicule une fois que la décision de "Sélection haute" a été prise.

5. EBS selon la revendication 1, 2 ou 3, dans lequel des moyens sont fournis pour permettre à la roue à faible mu de récupérer de la condition bloquée par la génération d'une période durant laquelle la pression d'essieu est réduite à un niveau bas pré-établi, de manière caractéristique 0,5 bars, puis autorisée à augmenter à un taux commandé pré-établi si une augmentation de la décélération du véhicule est détectée, telle que dérivée des signaux de vitesse mesurés à partir de l'une ou l'autre des roues qui roulent sur la surface d'adhérence élevée, tandis qu'une augmentation lente des pressions de freinage correspondantes est maintenue.

6. EBS selon la revendication 1, 2 ou 3, dans lequel des moyens sont fournis pour permettre à la roue à faible mu de récupérer de la condition bloquée par la génération d'une période durant laquelle la pression d'essieu est réduite audit faible niveau puis autorisée à augmenter audit taux commandé si un signal filtré représentatif du modulo du taux de changement de la décélération de roue mesurée montre une augmentation supérieure à un seuil pré-établi durant une période pendant laquelle la pression de freinage de l'essieu portant la roue à partir de laquelle est dérivé le signal de décélération continue d'augmenter lentement.

**7.** EBS selon la revendication 1, 2, 3 ou 4, dans lequel, dans le mode "Sélection haute", chaque roue à mu élevé d'essieu est commandée de telle sorte que le taux d'augmentation de la pression de freinage d'essieu qui est normalement proportionnel au niveau de pression développé, soit régulé dans un mode prioritaire par le niveau de glissement détecté entre la vitesse de référence du véhicule et la vitesse de roue effective mesurée, par le biais du mécanisme de génération de petites commandes de chute de pression qui sont proportionnelles au taux d'augmentation de la pression, espacées par des périodes d'augmentation de ladite pression.

**8.** EBS selon la revendication 6, dans lequel la vitesse de la roue à mu élevé est régulée à un niveau bas cible pré-établi de glissement, mais si le glissement de cette roue augmente, un pourcentage fixe de chute de pression de freinage est généré de manière à réduire le glissement de roue effectif à la valeur cible établie.

**9.** EBS selon la revendication 7 ou 8, dans lequel en cas de non-récupération de la roue à mu élevé, telle que détectée par les niveaux de glissement et de décélération de roue qui dépassent les seuils pré-établis, une commande de chute de pression ABS complète est produite jusqu'à réduction de la décélération de la roue.

**10.** EBS selon la revendication 1, 2 ou 3, dans lequel la transition du mu partagé au mu faible entraîne un retour au mode "Sélection basse" lorsque détecté par des niveaux de glissement ou de réaccélération de roue présentant des valeurs sensiblement égales aux deux roues sur l'essieu.

FIG. 1

**FIG. 2**

VEHICLE DECELERATION

WHEEL SPEEDS - FRONT

LEFT

RIGHT

WHEEL SPEEDS - REAR

LEFT

RIGHT

P. AXLE FRONT

P. AXLE REAR

t

**FIG. 3**

**FIG. 4a**

**FIG. 4b**

**FIG. 5**